# EUROPÄISCHE PATENTSCHRIFT

(11) **EP 0 528 101 B1**
(45) Veröffentlichungstag und Bekanntmachung des Hinweises auf die Patenterteilung: **11.01.1995**
(21) Anmeldenummer: 92103271.0
(22) Anmeldetag: 26.02.1992
(51) Int. Cl.: F16L 3/12, F16L 25/00, F16L 31/00, H02G 3/06

(54) **Mehrteiliger Kunststoff-Hohlkörper**
Multi-part plastics hollow body
Corps creux en matière plastique en plusieurs pièces

(30) Priorität: 09.08.1991 CH 2358/91
(43) Veröffentlichungstag der Anmeldung: 24.02.1993
(73) Patentinhaber: FRÄNKISCHE ROHRWERKE, GEBR. KIRCHNER GmbH & Co., D-97486 Königsberg (DE)
(72) Erfinder: Weisgerber, Jürgen, W-8721 Schwebheim (DE); Fastenrath, Ulrich, CH-8640 Rapperswil (CH); Kleeb, Ralf, CH-8330 Pfäffikon (CH)
(74) Vertreter: Schwabe, Hans-Georg, Dipl.-Ing.

(56) Entgegenhaltungen:
- EP-A- 0 069 223
- EP-A- 0 382 606

## Beschreibung

Die Erfindung betrifft einen mehrteiligen Kunststoff-Hohlkörper gemäß dem Oberbegriff des Anspruchs 1.

Ein solcher Kunststoff-Hohlkörper, wie er beispielsweise aus der EP-A-0 069 223 bekannt ist, wird beispielsweise von Kunststoffdosen gebildet, die aus einem Hohlkörper und einem Deckel bestehen, welcher mit dem Hohlkörper über Filmscharniere verbunden ist.

Um die Zuordnung der Teile des Hohlkörpers stets sicherzustellen und somit die Handhabung wesentlich zu vereinfachen, im übrigen aber auch die Herstellung besonders wirtschaftlich zu gestalten, sind die Teile miteinander einstückig ausgebildet und miteinander mittels Filmscharnieren verbunden.

In ähnlicher Weise sind auch Verbindungs- und Anschlußstücke für Wellrohre ausgebildet, die zwei gelenkig miteinander verbundene Rohrschellen aufweisen, welche an ihrer Innenseite mit Ausbildungen zum Eingriff in die Außenseite eines Wellrohres ausgebildet sind, dieses in ihrer Endlage formschlüssig umgreifen und mit ihren Enden mittels einer Schnellverschlußanordnung kraftübertragend ineinandergreifen.

An solchen Verbindungs- und Anschlußstücken können auch weitere Anschlußeinrichtungen, wie etwa Gewinde-Rohrstutzen, angeformt sein; sie können aber nicht nur am Ende, sondern auch inmitten eines Wellrohrstranges verwendet werden und dort etwa Rohrverzweigungen bilden oder Aufhängungen zum Tragen des Wellrohres halten.

Um einen guten Sitz des Wellrohres zu bewirken, müssen die Teile bzw. Rohrschellen der Rohrmuffe stramm auf dem Wellrohr sitzen, wodurch Umfangskräfte in der Rohrmuffe und somit auch in deren Filmscharnieren induziert werden.

Außerdem können auf das Wellrohr aufgebrachte Kräfte zusätzliche, unter Umständen sehr hohe Umfangskräfte in der Rohrmuffe verursachen.

Das Material dieser einstückigen Rohrmuffe muß einerseits so steif sein, daß die fertige Rohrmuffe nicht nachgeben kann, wenn Kräfte auf das Wellrohr aufgebracht werden; andererseits soll das Filmscharnier möglichst nachgiebig sein. Um diesen widersprechenden Anforderungen zu genügen, verwendet man ein Material, das bei ausreichender Wandstärke und geeigneter Formgebung unter den einwirkenden Kräften steif ist, als dünnes Band aber leicht biegsam ist.

Dieses Band, das das Filmscharnier bildet, muß nun alle in der Rohrmuffe auftretenden Umfangskräfte übertragen und darf sich hierbei nicht längen, da sonst der stramme Sitz der Rohrmuffe auf dem Wellrohr nicht gewährleistet ist. Auch das federnde Nachgeben der Filmscharniere bei kurzzeitiger Belastung sollte vermieden werden, da dann der stramme Sitz kurzzeitig gelockert wird.

Bildet man dagegen die Filmscharniere als so dickwandige Bänder aus, daß sie den obigen Anforderungen voll genügen, dann sind sie nicht mehr hinlänglich biegsam, und wenn man die Rohrmuffenteile in ihre Endlage biegt, dann verbiegen sich diese ebenfalls ein wenig, so daß ihr einwandfreier Sitz auf dem Wellrohr aus diesem Grunde nicht gewährleistet ist. Außerdem können für die einwandfreie Biegsamkeit ausreichend dünne Filmscharniere reißen, so daß dann das gesamte Anschluß- und Verbindungsstück ausfällt.

Um diesen Nachteil auszuräumen, wäre es grundsätzlich möglich, eine starre und ausreichend dimensionierte Scharnieranordnung zu verwenden, doch müßte man dann auf die Vorteile der einstückigen Ausbildung aller Teile des Hohlkörpers verzichten.

Aus dem Dokument EP-A-0 382 606 ist ein mehrteiliger Kunststoff-Hohlkörper bekannt, der sich mit vergleichbaren Problemen, wie diese oben aufgeführt sind, beschäftigt. Jedoch sind die Halbelemente des Hohlkörpers nach diesem Dokument aus dem Stand der Technik lediglich über ein dünnes Band miteinander verbunden, und es ist erforderlich, bei biegenden bzw. schliessenden oder öffnenden Bewegungen die Halbschalen über einen großen Schwenkbereich zu bewegen, wobei das Band, das die beiden Halbschalen zusammenhält, geschwächt werden kann.

Die EP-A-0 069 223 betrifft einen gattungsgemäßen Hohlkörper bzw. eine Rohrschelle, bei der die Halbelemente um eine Filmscharnieranordnung geschwenkt werden können. Jedoch wird auch hier die Filmscharnieranordnung dadurch stark belastet, daß die Halbschalen ebenfalls über einen großen Schwenkradius in die Schließ- bzw. Öffnungslage verschwenkt werden müssen, wobei das Filmscharnier ebenfalls starken Belastungen unterworfen ist. Außerdem führt die Mimik des Verschlußmechanismus bei dieser bekannten Rohrschelle zu Problemen.

Aus der EP-A-0 351 524 ist eine Rohrschelle bekannt, bei der die Halbschalen jeweils für sich über jeweilige Verbindungsstreben an einer Sockelplatte befestigt sind. Beim Verschließen der Halbschalen greifen diese mit Spiel mit Eingriffselementen in entsprechende Gegenstücke an der Sockelplatte ein und greifen ebenso mittels komplizierten, verzahnten Verriegelungsmechanismen auf der gegenüberliegenden Seite ineinander ein. Diese Rohrschelle ist zum einen relativ kompliziert aufgebaut, anfällig und ist aufgrund ihres Spiels nicht dazu in der Lage, einen dichten Verschluß abzugeben.

Es ist die Aufgabe der vorliegenden Erfindung, den Nachteilen des Standes der Technik soweit als möglich Abhilfe zu verschaffen; insbesondere soll ein mehrteiliger Kunststoff-Hohlkörper vorgeschlagen werden, dessen Halbschalen nur relativ geringe Strecken verschwenkt werden müssen, um entsprechende Rohre einlegen zu können und diese so dicht wie möglich miteinander verbinden zu können.

Diese Aufgabe wird durch einen mehrteiligen Kunststoff-Hohlkörper mit den im Patentanspruch 1 aufgeführten Merkmalen gelöst. Zweckmäßige Ausführungsformen gehen aus den Unteransprüchen hervor.

Die gemäß der vorliegenden Erfindung zu erzielenden Vorteile beruhen darauf, daß zwischen den Halbschalen ein Verbindungssteg an einem Rohrstutzen ausgebildet ist, wobei der Verbindungssteg von einer von dessen Endflächen so absteht, daß sich die Filmscharnieranordnungen im wesentlichen parallel zur Mittelachse des Rohrstutzens erstrecken, wobei der Rohrstutzen nahe seiner Endfläche an seiner Außenseite eine Umfangsausbildung aufweist und die beiden am Verbindungssteg angelenkten Rohrmuffenteile über den Rohrstutzen hinaus verlängert sind, und in ihrer Endlage in die Umfangsausbildung zur Herstellung einer in Axialrichtung festen Verbindung eingreifen.

Gemäß der Erfindung ist der Hohlkörper dreiteilig ausgebildet, wobei der Schwenkwinkel, welchen jede der Scharnieranordnungen zulassen muß, verkleinert wird.

Um dabei die Anbringung des als Verbindungs und Anschlußstück mit einem tragenden Grundelement ausgebildeten Hohlkörpers an einem Wellrohr zu erleichtern, ist der mittlere Teil als ein am Grundelement fest angebrachtes bzw. einstückig mit diesem ausgebildetes Verbindungsstück ausgebildet, das vorzugsweise die als Aussparungen ausgebildeten Gegenausbildungen aufweist.

Hierbei sind bevorzugt das Filmscharnier und die Eingriffsanordnung aus Eingriffsteil und Gegenausbildung radial nebeneinanderliegend angeordnet, so daß das Filmscharnier auch bei federnd verformten Teilen des Hohlkörpers weitgehend entlastet bleibt.

Bevorzugte weitere Ausbildungen des als Rohrmuffe ausgebildeten Hohlkörpers verbessern dessen Steifigkeit und die Steifigkeit des Schnellverschlusses und sorgen somit für die feste Verbindung der beiden Elemente der Eingriffsanordnung(en).

Der Gegenstand der Erfindung wird anhand der beigefügten, schematischen Zeichnung beispielsweise noch näher erläutert; in dieser zeigt:
- Fig. 1: ein Verbindungs- und Anschlußstück für Wellrohre, teilweise geschnitten, vor dem Einbau, das ein bevorzugtes Ausführungsbeispiel der Erfindung bildet, und
- Fig. 2: den Schnitt A-B in Fig. 1.

Das in der Zeichnung gezeigte Verbindungs- und Anschlußstück ist, wenn man von der eingebauten Dichtung 10 absieht, als einstückiges Spritzgußteil aus thermoplastischem, bei hinlänglich geringer Wandstärke flexiblem Kunststoff gebildet.

Ein Rohrstutzen 1 mit einer Mittelachse 3 ist aus einem Rohrabschnitt 2 mit einem Außengewinde und einem Endflansch 4 gebildet, der eine im wesentlichen kreiszylindrische, zum Rohrabschnitt 2 konzentrische Außenfläche aufweist, an der eine radial vorspringende Nase 6 und eine Umfangsnut 5 mit kantigem Nutgrund ausgebildet sind.

Der Durchmesser des bohrungsartigen Durchlasses 7 im Rohrstutzen 1 ist im Endflansch 4 erweitert und bildet einen Endabschnitt 8 mit einer kreiszylindrischen Oberfläche, in der eine Ringnut 9 ausgebildet ist.

Im Endabschnitt 8 sitzt eine Büchse 10 aus thermoplastischem, flexiblem Gummi, die einen Außen-Ringwulst aufweist, welcher in die Ringnut 9 eingeschnappt ist und somit die Büchse bzw. Dichtung 10 in ihrer Lage hält.

Die Dichtung 10 weist eine lichte Weite auf, die größer ist als die des Hauptteils des Durchlasses 7 und sich zum freien Ende des Endflansches 4 konisch erweitert.

Am Endflansch 4 ist ein Mittelsteg 11 angeformt, der aus einer im wesentlichen quadratischen Platte gebildet ist, die an die freie Stirnfläche des Endflansches 4 mit einer Kante einstückig angrenzt und parallel zu einer Tangentialebene der Außenfläche des Endflansches liegt, über diese mit seiner Außenkontur nach außen ein wenig übersteht, und zwar genau der Nase 6 gegenüberliegend und im wesentlichen um dasselbe radiale Maß, und mit seiner Innenkontur radial nach innen bis nahe an die Einmündung des erweiterten Abschnittes des Durchlasses 7 in die freie Stirnfläche des Endflansches heranreicht.

Der Mittelsteg 11 erstreckt sich in Tangentialrichtung zum Endflansch 4 so weit, daß sich seine geradlinige Innenkontur gerade bis an den Außenumfang der Stirnfläche des Endflansches 4 erstreckt.

An den beiden, zur Mittelachse 3 parallelen Seitenflächen des Mittelstegs 11, und zwar im wesentlichen bündig an deren Außenkanten anschließend, ist jeweils ein Filmscharnier 12a, 12b ausgebildet, das von dem vom Endflansch 4 abgelegenen Ende der Außenkanten ausgeht und sich über etwa zwei Drittel deren Länge erstreckt, so daß zwischen jedem Filmscharnier 12a, 12b und der freien Stirnfläche des Endflansches 4 ein Abstand vorliegt, der etwa ein Drittel der Kantenlänge des Mittelsteges 11 beträgt.

An der der Mittelachse 3 zugewandten Fläche des Mittelsteges 11 sind zwei Nuten 13a, 13b ausgebildet, die parallel zur Mittelachse 3 verlaufen. Jede Nut 13a, 13b ist mit dem jeweils gleichen Abstand zu einem der Filmscharniere 12a, 12b und nahe diesen ausgebildet, weist in Achsrichtung die gleiche Länge auf wie diese und mündet jeweils in das von der freien Stirnfläche des Endflansches 4 abgewandte Ende des Mittelsteges 11 ein. Jede der Nuten 13a, 13b erstreckt sich ihrer Tiefe nach nicht senkrecht zur die Nut aufweisenden Fläche des Mittelstegs 11, sondern laufen mit zunehmender Tiefe aufeinander zu.

Am Filmscharnier 12a ist ein Rohrmuffenteil 14a, am Filmscharnier 12b ein Rohrmuffenteil 14b angeformt. Die beiden Rohrmuffenteile 14a, 14b sind, mit Ausnahme der an ihren vom Filmscharnier 12a, 12b abgewandten Ende angeordneten Schnellverschluß-Halbelementen 15a, 15b, spiegelbildlich ausgebildet.

Jedes Rohrmuffenteil 14a, 14b weist eine Außenwand 16a, 16b auf, die die Form eines Kreiszylindermantelausschnittes aufweist, der in der (nicht gezeigten) Endlage der Rohrmuffenteile 14a, 14b konzentrisch zur Mittelachse 3 angeordnet ist.

An dem vom Endflansch 4 abgelegenen Ende ist am Rohrmuffenteil 14a, 14b jeweils ein sich einwärts erstreckender vorderer Endsteg 17a, 17b, und an dem Endflansch 4 zugewandten Ende ein hinterer Endsteg 18a, 18b ausgebildet. Jeder der Endstege 17a, 17b und 18a, 18b erstreckt sich in der Endlage der Rohrmuffenteile 14a, 14b radial nach innen und weist eine innere kreisbogenförmige Endkante auf, die zur Mittelachse 3 konzentrisch verläuft; der vordere Endsteg 17a, 17b ist an seiner Innenkante abgerundet, der hintere Endsteg 18a, 18b ist an seiner Innenkante kantig ausgebildet. In der Endlage greift der hintere Endsteg 18a, 18b in die Umfangsnut 5 ein und verbindet somit die beiden Rohrmuffenteile formschlüssig mit dem Endflansch 4 und damit mit dem Rohrstutzen 1. Der vordere Endsteg 17a, 17b
greift in eine Umfangssicke eines Wellrohres (nicht gezeigt) ein, wenn es mit seinem freien Ende in die Dichtung 10 dichtend eingeschoben ist und sich die Rohrmuffenteile 14a, 14b in ihrer Endlage befinden; somit wird das Wellrohr formschlüssig mit dem Rohrstutzen 1 verbunden und axial festgelegt.

Die hinteren Endstege 18a, 18b weisen jeweils zum dem Endflansch 4 zugewandten axialen, hinteren Ende der Filmscharniere 12a, 12b einen Axialabstand nach hinten auf; die beiden Rohrmuffenteile 14a, 14b sind vom hinteren Ende des jeweiligen Filmscharniers 12a, 12b nach hinten verlängert und gehen bogenförmig in die einander zugewandten Enden der hinteren Endstege 18a, 18b über.

Mit der gleichen Bogenlänge und Radialerstreckung wie die hinteren Endstege 18a, 18b sind an die Außenwände 16a, 16b Anschlagstege 19a, 19b angeformt, deren Abstand zum jeweiligen hinteren Endsteg 18a, 18b dem Abstand der Umfangsnut 5 von der freien Stirnfläche des Endflansches 4 entspricht, so daß die Anschlagstege 19a, 19b in der Endlage der Rohrmuffenteile 14a, 14b gegen die genannte Stirnfläche anliegen.

Zwischen dem vorderen Endsteg 17a, 17b und dem Anschlagsteg 19a, 19b eines jeden Rohrmuffenteils 14 a, 14b erstrecken sich eine Anzahl, bevorzugt sechs, von Axialstegen, von denen jeweils der mittlere oder der in der Endlage der Rohrmuffenteile 14a, 14b der Mittelachse gegenüberliegende sich in dieser Endlage radial zu dieser Mittelachse erstreckt und die anderen sich zum mittleren jeweils parallel erstrecken.

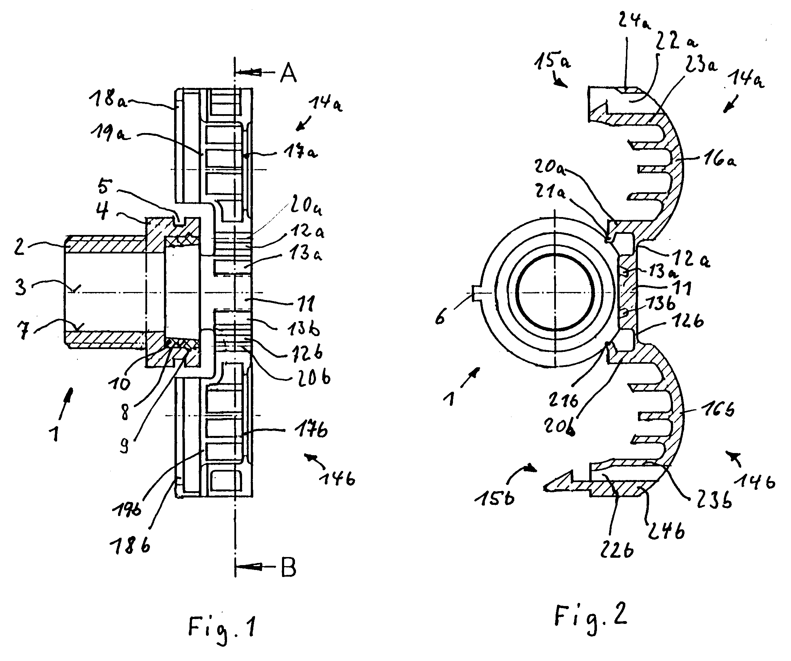

Die beiden dem Filmscharnier 12a, 12b zugewandten Axialstege 20a, 20b liegen in der Endlage der Rohrmuffenteile 14a, 14b einander fluchtend gegenüber und stützen das aufgenommene Wellrohr tangential von der Seite her ab. An den dann einander und dem Mittelsteg 11 zugewandten Kanten weisen die beiden genannten Axialstege 20a, 20b jeweils einen Längssteg 21a, 21b auf, die sich parallel zum zugehörigen Filmscharnier und über die gleiche Länge wie dieses erstrecken und deren Höhe in der in Fig. 2 gezeigten, offenen Lage jeweils etwa der Mittelachse 3 zugewandt ist. Im übrigen bilden jeweils ein Längssteg 21a, 21b und das zugehörige Filmscharnier 12a, 12b die beiden Seitenwände einer Nut, deren Boden von der dem Filmscharnier 12a, 12b zugewandten Seitenfläche des Axialsteges 20a, 20b gebildet wird; in der Endlage der Rohrmuffenteile 14a, 14b umgreifen diese beiden Nuten die zugewandten Seiten des Mittelsteges 11.

Wenn die beiden Rohrmuffenteile 14a, 14b in ihre Endlage um die beiden Filmscharniere 12a, 12b geklappt werden, dann greifen die Längsstege 21a, 21b in die entsprechende Nut 13a, 13b ein.

Die drei an den Axialsteg 20a, 20b angrenzenden Axialstege weisen unterschiedliche Abmessungen auf und sind an ihren Innenkanten abgeschrägt bzw. bogenförmig ausgenommen, so daß sie in der Endlage der Rohrmuffenteile 14a, 14b die Außenkontur eines eingespannten Wellrohres abstützen.

Die beiden außenliegenden Axialstege 23a, 24a und 23b, 24b sowie die dazwischenliegenden Aussparungen 22a, 22b bilden die Schnellverschluß-Halbelemente 15a, 15b. Hierbei ist das freie Ende des Axialsteges 24b verlängert und mit einem dem Axialsteg 23b zugewandten Haken versehen, während das freie Ende des Axialsteges 23a mit einem dem Axialsteg 24a zugewandten Haken versehen ist; werden die beiden Rohrmuffenteile 14a, 14b in ihre Endlage geschwenkt, dann hintergreifen einander die beiden Haken federnd, wobei der am Axialsteg 24b ausgebildete Haken in die Aussparung 22a gelangt und vom Axialsteg 24a so abgestützt wird, daß er sich nicht mehr aus dem Eingriff mit dem anderen Haken selbsttätig lösen kann.

Die Außenfläche des Axialstegs 24b ist so abgesetzt, daß in ihren Absatz der Axialsteg 24a so eingreifen kann, daß die beiden Axialstege 24a, 24b in der Endlage eine bündige Außenfläche bilden, die parallel zur Außenfläche des Mittelstegs 11 und dieser bezüglich der Mittelachse 3 gegenüberliegend angeordnet ist.

In der Endlage der Rohrmuffenteile 14a, 14b bilden die genannten Außenflächen die Angriffsausbildung für einen Schraubenschlüssel. Umfangskräfte werden hierbei nicht über die Filmscharniere 12a, 12b übertragen, sondern über die Längsstege 21a, 21b und die Nuten 13a, 13b.

## Patentansprüche

1. Mehrteiliger Kunststoff-Hohlkörper, dessen mindestens zwei Teile (11, 14a, 14b) an in ihrer Ausgangslage nebeneinanderliegenden Kanten durch eine oder jeweils eine Filmscharnieranordnung (12a, 12b) schwenkbar miteinander verbunden sind und ein offenes, einstückiges Kunststoffteil bilden, an dessen gegenüberliegenden freien Endkanten jeweils ein Halbelement eines Schnellverschlusses ausgebildet ist, der nach dem Verschwenken der Teile (14a, 14b) um die Filmscharnieranordnung(en) (12a, 12b) in ihre Endlage, in welcher diese Teile den Hohlkörper bilden, schließbar ist, wobei an mindestens einem (14a, 14b) zweier aneinander angrenzender Teile (11, 14a, 14b) nahe oder an deren der Filmscharnieranordnung (12a, 12b) benachbarter Kante ein Eingriffselement (21 a, 21b) ausgebildet ist, das beim Schwenken der beiden Teile (14a, 14b) um die zugehörige Filmscharnieranordnung 812a, 12b) in ihre Endlage eine Gegenausbildung (13a, 13b) am anderen Teil (11) so hintergreift, daß bei Versagen der oder der zugehörigen Filmscharnieranordnung (12a, 12b) das oder jedes Eingriffselement (21a, 21b) auch dann in Eingriff mit der oder der zugehörigen Gegenausbildung (13a, 13b) verbleibt, wenn eine Schwenkbelastung um den Schnellverschluß (15a, 15b) oder um eine andere Filmscharnieranordnung (13a, 13b) erfolgt, **gekennzeichnet** durch die folgenden Merkmale:
a) das andere Teil (11) ist als der Verbindungssteg (11) an einem Rohrstutzen (1) ausgebildet,
b) der Verbindungssteg (11) steht von einer von dessen Endflächen so ab, daß sich die Filmscharnieranordnungen (12a, 12b) im wesentlichen parallel zur Mittelachse (3) des Rohrstutzens (1) erstrecken,
c) der Rohrstutzen (1) weist nahe dieser Endfläche an seiner Außenseite eine Umfangsausbildung (5) auf,
d) die beiden am Verbindungssteg (11) angelenkten Rohrmuffenteile (14a, 14b) sind über den Rohrstutzen (1) hin verlängert, und
e) greifen in ihrer Endlage in die Umfangsausbildung (5) zur Herstellung einer in axialer Richtung festen Verbindung ein.

2. Hohlkörper nach Anspruch 1, dadurch **gekennzeichnet,** daß der Schnellverschluß (15a, 15b) in der Endlage dem Verbindungssteg (11) gegenüberliegt, und daß die Außenfläche des Verbindungsstegs (11), bevorzugt auch die von der Außenseite der beiden Rohrmuffenteile (14a, 14b), im Bereich des Schnellverschlusses (15a, 15b) gebildete Außenfläche, als ebene Eingriffsfläche für einen Schlüssel ausgebildet ist bzw. sind.

3. Hohlkörper nach einem der Ansprüche 1 oder 2, dadurch **gekennzeichnet,** daß das oder jedes Eingriffselement als Vorsprung (21a, 21b) ausgebildet ist, der sich längs eines Kreisbogens oder einer Tangente an diesen um die Schwenkachse der oder der zugehörigen Filmscharnieranordnung (12a, 12b) erstreckt, daß die Gegenausbildung als zum Vorsprung (21a, 21b) im wesentlichen komplementäre Aussparung (13a, 13b) ausgebildet ist, und daß der Vorsprung (21a, 21b) und die komplementäre Aussparung (13a, 13b) an der der Innenseite des Hohlkörpers zugewandten Oberfläche der sich dann in ihrer Endlage befindlichen, mindestens zwei Teile (11, 14a, 14b) angeordnet sind.

4. Hohlkörper nach Anspruch 3, dadurch **gekennzeichnet**, daß der Vorsprung als eine zur Schwenkachse parallele Leiste (21a, 21b) ausgebildet ist und sich bevorzugt im wesentlichen über die gesamte Breite mindestens eines der benachbarten Teile (11, 14a, 14b) erstreckt.

5. Hohlkörper nach einem der Ansprüche 3 oder 4, dadurch **gekennzeichnet,** daß die an die Filmscharnieranordnung (12a, 12b) angrenzende Kante des einen Teiles (14a, 14b) eine der Kante des anderen Teiles (11) zugewandte Nut aufweist, daß die Filmscharnieranordnung (12a, 12b) an der Außenseite der Nut und der dieser zugewandten Kante angeordnet ist, daß in der Endlage der mindestens zwei Teile (11, 14a, 14b) die Nut die ihr zugewandte Endkante umgreift, daß der Vorsprung (21a, 21b) als innenliegende Nutwand ausgebildet ist und daß die Aussparung (13a, 13b) in der Innenfläche des zugehörigen Teiles (11) ausgebildet ist.

6. Hohlkörper nach einem der Ansprüche 1 bis 5, dadurch **gekennzeichnet,** daß der Hohlkörper drei Teile (11, 14a, 14b) aufweist, von denen der mittlere als Verbindungssteg (11) ausgebildet ist, und daß die beiden Filmscharnieranordnungen (12a, 12b) im wesentlichen zueinander parallel angeordnet sind.

7. Hohlkörper nach Anspruch 6, dadurch **gekennzeichnet,** daß die Aussparungen (13a, 13b), die den beiderseits des Verbindungssteges (11) ausgebildeten Filmscharnieranordnungen (12a, 12b) zugeordnet sind, in diesem ausgebildet sind.

8. Hohlkörper nach einem der Ansprüche 1 bis 7, dadurch **gekennzeichnet,** daß der Hohlkörper als Rohrmuffe ausgebildet ist, die bevorzugt mindestens einen Innenvorsprung (17a, 17b, 19a, 19b) aufweist, welcher zum Eingriff mit den Umfangswülsten und/oder -sicken eines Wellrohres eingerichtet sind.

## Claims

1. A multi-part plastic hollow body, having at least two parts (11, 14a, 14b) which in their initial position with adjacent edges are pivotably connected by one or another integral hinge arrangement (12a, 12b) and form an open, single-piece plastic part, at the opposite free end edges of which a half-element of a quick-acting closure is constructed, which can be closed after swivelling the parts (14a, 14b) around the integral hinge arrangement(s) (12a, 12b) into their end position, in which these parts form the hollow body, with an engagement element (21 a, 21b) being constructed at at least one (14a, 14b) of two adjacent parts (11, 14a, 14b) close to or at its edge adjacent to the integral hinge arrangement (12a, 12b), which element, when the two parts (14a, 14b) swivel around the associated integral hinge arrangement (12a, 12b) into their end position, engages behind a complementary formation (13a, 13b) on the other part (11) so that, if the or the associated integral hinge arrangement (12a, 12b) fails, the or each engagement element (21a, 21b) then also remains in engagement with the or the associated complementary formation (13a, 13b) if a swivel loading around the quick-acting closure (15a, 15b) or around another integral hinge arrangement (13a, 13b) occurs,
**characterised by** the following features:
a) the other part (11) is constructed as the connecting web (11) on a socket piece (1),
b) the connecting web (11) protrudes from one of its end faces so that the integral hinge arrangements (12a, 12b) extend substantially parallel to the central axis (3) of the socket piece (1),
c) the socket piece (1) comprises a circumferential formation (5) close to this end face on its outside,
d) the two connecting sleeve parts (14a, 14b) hinged at the connecting web (11) are extended over the socket piece (1), and
e) in their end position engage in the circumferential formation (5) to produce a connection secure in the axial direction.

2. A hollow body according to Claim 1,
**characterised in that** in the end position the quick-acting closure (15a, 15b) lies opposite the connecting web (11),
**and in that** the external surface of the connecting web (11), and preferably also the external surface formed by the outside of the two connecting sleeve parts (14a, 14b) in the region of the quick-acting closure (15a, 15b) is or are constructed as a plane engagement face for a key.

3. A hollow body according to one of Claims 1 or 2,
**characterised in that** the or each engagement element is constructed as a protuberance (21a, 21b), which extends along an arc or a tangent thereon around the swivel axis of the or of the associated integral hinge arrangement (12a, 12b),
**in that** the complementary formation is constructed as a recess (13a, 13b) substantially complementary to the protuberance (21a, 21b),
**and in that** the protuberance (21a, 21b) and the complementary recess (13a, 13b) are disposed at the surface, turned towards the inside of the hollow body, of the parts (11, 14a, 14b), numbering at least two, when located in their end position.

4. A hollowing body according to Claim 3,
**characterised in that** the protuberance is constructed as a shoulder (21a, 21b) parallel to the swivel axis and preferably extends substantially over the entire width of at least one of the adjacent parts (11, 14a, 14b).

5. A hollow body according to one of Claims 3 or 4,
**characterised in that** the edge of one part (14a, 14b) abutting the integral hinge arrangement (12a, 12b) comprises a groove close to the edge of the other part (11),
**in that** the integral hinge arrangement (12a, 12b) is disposed on the outside of the groove and of its end close thereto,
**in that** in the end position of the parts numbering at least two (11, 14a, 14b) the groove engages around the end edge close thereto,
**in that** the protuberance (21a, 21b) is constructed as an internal groove wall,
**and in that** the recess (13a, 13b) is constructed in the internal face of the associated part (11).

6. A hollow body according to one of Claims 1 to 5,
**characterised in that** the hollow body comprises three parts (11, 14a, 14b), the centre one of which is constructed as a connecting web (11),
**and in that** the two integral hinge arrangements (12a, 12b) are disposed so that they are substantially parallel to one another.

7. A hollow body according to Claim 6,
**characterised in that** the recesses (13a, 13b), which are associated with the integral hinge arrangements (12a, 12b) constructed on both sides of the connecting web (11), are constructed in said web.

8. A hollow body according to one of Claims 1 to 7,
**characterised in that** the hollow body is constructed as a connecting sleeve, which preferably has at least one inner protuberance (17a, 17b, 19a, 19b), which is arranged to engage with the circumferential bulbs and/or beads of a corrugated pipe.

## Revendications

1. Corps creux en matière plastique en plusieurs pièces dont au moins deux (11, 14a, 14b) sont articulées, sur leurs bords juxtaposés dans leur position initiale, par un, ou à chaque fois un, système à charnière souple (12a, 12b) et forment un élément en matière plastique ouvert d'un seul tenant, sur les bords terminaux libres opposés duquel est conformé à chaque fois un demi-élément d'une fermeture rapide qui peut être fermée après le pivotement des pièces (14a, 14b) autour du (des) système(s) à charnière souple (12a, 12b) dans leur position terminale dans laquelle lesdites pièces forment un corps creux, dans lequel il est prévu, sur au moins l'une (14a, 14b) de deux pièces contigües (11, 14a, 14b), à proximité du ou sur le bord avoisinant le système à charnière souple (12a, 12b), un élément d'encliquetage (21a, 21b) qui, lors du pivotement des deux parties (14a, 14b) autour du système à charnière souple (12a, 12b) associé dans leur position terminale, passe derrière une structure conjuguée (13a, 13b) sur l'autre pièce (11) de telle façon que lors d'une défaillance du ou des système(s) à charnière souple (12a, 12b), le ou chacun des élément(s) d'encliquetage (21a, 21b) reste en prise avec la ou les structure(s) conjuguée(s) (13a, 13b), et cela même en cas d'application d'un effort de pivotement autour de la fermeture rapide (15a, 15b) ou autour d'un autre système à charnière souple (13a, 13b), caractérisé en ce que
a) l'autre pièce (11) est conformée en barrette de raccordement (11) sur une tubulure (1),
b) la barrette de raccordement (11) dépasse de l'une des surfaces terminales de celle-ci de telle façon que les systèmes à charnière souple (12a, 12b) s'étendent sensiblement parallèlement à l'axe central (3) de la tubulure (1),
c) la tubulure (1) présente sur sa surface extérieure, à proximité de cette surface terminale, une conformation périphérique (5),
d) les deux pièces de manchon (14a, 14b) articulées sur la barrette de raccordement (11) sont prolongées au-delà de la tubulure (1), et
e) s'engagent, dans leur position terminale, dans la conformation périphérique (5) pour réaliser un raccord fixe dans le sens axial.

2. Corps creux selon la revendication 1, caractérisé en ce que, dans la position terminale, la fermeture rapide (15a, 15b) se situe en face de la barrette de raccordement (11), et que la surface extérieure de la barrette de raccordement (11), de préférence aussi la surface extérieure formée par la face extérieure des deux pièces de manchon (14a, 14b), dans la région de la fermeture rapide (15a, 15b), est ou sont réalisée(s) sous la forme d'une surface d'attaque plane pour une clé.

3. Corps creux selon l'une des revendications 1 ou 2, caractérisé en ce que l'élément d'encliquetage ou chaque élément d'encliquetage est conformé en saillie (21a, 21b) qui s'étend le long d'un arc de cercle ou d'une tangente sur celui-ci autour de l'axe de pivotement du ou des systèmes à charnière souple associé(s) (12a, 12b), que la structure conjuguée est réalisée sous la forme d'un évidement (13a, 13b) sensiblement complémentaire à la saillie (21a, 21b), et que la saillie (21a, 21b) et l'évidement complémentaire (13a, 13b) sont disposés sur la surface tournée vers la face intérieure du corps creux, d'au moins deux des pièces (11, 14a, 14b) qui se trouvent alors dans leur position terminale.

4. Corps creux selon la revendication 3, caractérisé en ce que la saillie est réalisée sous la forme d'une baguette (21a, 21b) orientée parallèlement à l'axe de pivotement et qu'elle s'étend de préférence sensiblement sur toute la largeur d'au moins l'une des pièces voisines (11, 14a, 14b).

5. Corps creux selon l'une des revendications 3 ou 4, caractérisé en ce que le bord de l'une des pièces (14a, 14b) qui avoisine le système à charnière souple (12a, 12b) présente une rainure tournée vers le bord de l'autre pièce (11), que le système à charnière souple (12a, 12b) est disposé sur la face extérieure de la rainure et du bord tourné vers celle-ci, que dans la position terminale d'au moins deux des pièces (11, 14a, 14b), la rainure enveloppe le bord terminal tourné vers ladite rainure, que la saillie (21a, 21b) est conformée en paroi intérieure de la rainure, et que l'évidement (13a, 13b) est formé dans la surface intérieure de la pièce (11) associée.

6. Corps creux selon l'une des revendications 1 à 5, caractérisé en ce que le corps creux comprend trois pièces (11, 14a, 14b) dont la pièce centrale est conformée en barrette de raccordement (11), et que les deux systèmes à charnière souple (12a, 12b) sont sensiblement parallèles l'un à l'autre.

7. Corps creux selon la revendication 6, caractérisé en ce que les évidements (13a, 13b) associés aux systèmes à charnière souple (12a, 12b) réalisés de part et d'autre de la barrette de raccordement (11), sont formés dans cette dernière.

8. Corps creux selon l'une des revendications 1 à 7, caractérisé en ce que le corps creux est réalisé sous la forme d'un manchon tubulaire qui présente de préférence au moins une saillie intérieure (17a, 17b, 19a, 19b) agencée pour coopérer avec les bourrelets et/ou moulures périphériques d'un tube ondulé.
